# EUROPÄISCHE PATENTSCHRIFT

(11) **EP 0 947 392 B1**
(45) Veröffentlichungstag und Bekanntmachung des Hinweises auf die Patenterteilung: **31.10.2001**
(21) Anmeldenummer: 98104557.8
(22) Anmeldetag: 13.03.1998
(51) Int. Cl.: B60R 21/09, B60T 7/06

(54) **Lagerkonsolen-Anordnung für Pedale in Kraftfahrzeugen**
Support console assembly for a pedal in a vehicle
Arrangement de console de support pour pédale dans un véhicule

(43) Veröffentlichungstag der Anmeldung: 06.10.1999
(73) Patentinhaber: Ford Global Technologies, Inc., A subsidiary of Ford Motor Company, Dearborn, Michigan 48126 (US)
(72) Erfinder: Hoerster, Jochen, 50735 Koeln (DE)
(74) Vertreter: Messulam, Alec Moses

(56) Entgegenhaltungen:
- EP-A- 0 893 310
- DE-A- 3 533 420
- DE-A- 19 501 859
- DE-C- 19 631 212

## Beschreibung

Die Erfindung bezieht sich auf eine Lagerkonsolen-Anordnung für Pedale in Kraftfahrzeugen, der im Oberbegriff des Patentanspruches 1 erläuterten Art.

Aus der DE 35 33 420 B1 ist eine solche Lagerkonsolen-Anordnung für Pedale in Kraftfahrzeugen bekannt. Diese Lagerkonsolen-Anordnung besteht aus einer ersten, U-förmigen, mit ihrer Basis an einem im wesentlichen senkrechten Bereich der Spritzwand/Windlauf-Baugruppe des Kraftfahrzeuges befestigten Lagerkonsole, die mit einer zweiten, U-förmigen, mit ihrer Basis an einem im wesentlichen horizontalen Bereich der Spritzwand/Windlauf-Baugruppe befestigten Stützkonsole zusammenwirkt, um die Schwenkachse des Bremspedales in beiden Konsolen lagefest und schwenkbar gelagert aufzunehmen.

Bei einer infolge eines Frontalaufpralls durch die Antriebseinheit im Motorraum, die nach hinten verlagert wird; auftretenden Verlagerung der im wesentlichen senkrechten Bereiche der Spritzwand/Windlauf-Baugruppe wirken die beiden Konsolen derart miteinander zusammen, daß die Schwenkachse des Pedales bei sich nach hinten bewegender erster Lagerkonsole von dieser Lagerkonsole abgekoppelt wird und in ihrer Lage in der zweiten Stützkonsole verbleibt. Das führt zu dem Nachteil, daß die Kolbenstange des Bremskraftverstärkers, die unterhalb der Schwenkachse angreift, bei ihrer Bewegung nach hinten ein Moment auf das Bremspedal ausübt, daß dieses nach hinten oben zu verschwenken sucht. Eine solche Bewegung ist jedoch für die in diesem Bereich befindlichen Beine eines Fahrers des Kraftfahrzeuges, die bei einem Frontalaufprall selbstverständlich nach vorne geschleudert werden, sehr verletzungsgefährlich.

Eine weitere Pedalanordnung zur Reduzierung der Verletzungsgefahr des Fahrers im Fußraum ist in der EP-A-0893310 beschrieben. Diese Schrift stellt einen Stand der Technik nach Art. 54(3) und (4) EPÜ dar. Ein Lagerbock ist an der Stirnwand unterhalb eines Querträgers angeordnet. Ein Pedal, welches im Lagerbock schwenkbar gelagert ist, weist einen Stützfortsatz auf, der mit einer korrespondierenden Abgleitfläche in Wirkverbindung steht, wobei die Wirkfläche in einem Abstand hinter dem Lagerbock an einem karosseriefesten Querträger angeordnet ist. Bei einer Deformation der Stirnwand und einer daraus resultierenden Kippbewegung des Lagerbockes nach oben um eine horizontale Kippachse unmittelbar am Querträger stößt der Stützfortsatz gegen die Abgleitfläche und bewirkt dadurch eine gegensinnige Schwenkbewegung der Pedale um ihre Schwenkachse am Lagerbock aus dem Fußraum des Fahrers heraus.

Nachteilig ist hier, dass für die sichere Funktion der Schwenkbewegung der Pedale bei einer der Deformation der Stirnwand eine Kippbewegung des Lagerbockes notwendig ist. Bei Abweichungen von der idealen Deformation in Längsrichtung erfüllt die Anordnung ihre Funktion nur noch teilweise. Weiterhin kann der Lagerbock nur unterhalb eines steifen Querträgers angeordnet werden, und der Querträger darf selbst möglichst keine Deformation erfahren. Dadurch ist die Anwendung auf wenige Ausführung von Fahrzeugspritzwänden beschränkt.

Aus der DE-C-19631212 ist eine Fahrpedaleinheit bekannt, bei der der Lagerbock als stabiles, kraftaufnehmendes Teil ausgebildet ist und gleichzeitig an der Spritzwand und an einem Querträger befestigt ist. Das Pedal weist ein Anschlagteil auf, das sich vom Fahrer aus gesehen vor dem Querträger und über der Schwenkachse des Pedals befindet. Bei einer Deformation der Spritzwand drückt die Betätigungsstange des Bremsgerätes auf das Pedal, welches in den Fahrgastraum schwenken würde. Sobald jedoch das Anschlagteil am Querträger anschlägt, wird die Schwenkbewegung gestoppt und die volle Kraft der Betätigungsstange wirkt auf die Lagerbolzen der Schwenkachse. Bei einer vorgewählten Kraft brechen die Lagerbolzen und geben das Pedal frei.

Die freigebenen Pedale können, da weiter mit der starren Betätigungsstange des Bremsgerätes verbunden, weiter in den Fußraum eindringen und dort durch unkontrollierte Bewegungen Verletzungen beim Fahrer hervorrufen.

Die Aufgabe der Erfindung ist es, eine Lagerkonsolen-Anordnung der im Oberbegriff des Patentanspruches 1 erläuterten Art derart auszugestalten, daß die Pedale bei einem Frontalaufprall und einem dadurch bewirkten Verformen des im wesentlichen senkrechten Bereiches der Spritzwand/Windlauf-Baugruppe aus dem Beinbereich eines Fahrers weg nach vorne verschwenkt werden, um die Verletzungsgefahr soweit wie möglich herabzusetzen.

Gemäß der Erfindung wird diese Aufgabe gelöst, indem eine Lagerkonsolen-Anordnung für Pedale in Kraftfahrzeugen, der im Oberbegriff des Patentanspruches 1 erläuterten Art die im Kennzeichenteil des Patentanspruches 1 aufgezeigten Merkmale aufweist.

Dadurch, daß die Pedale einen über ihre Schwenkachse hinausragenden, ihre Ruhelage bestimmenden Anschlagarm aufweisen und der mit diesen zusammenwirkende Anschlag an der ersten Lagerkonsole oberhalb der Schwenkachse angeordnet ist, wird bei einer Verlagerung des im wesentlichen senkrechten Bereiches der Spritzwand/Windlauf-Baugruppe nach hinten den Pedalen eine erzwungene Schwenkbewegung auferlegt, die sie aus dem Fuß- und Beinbereich des Fahrers soweit wie möglich nach vorne zurückzieht.

Die hierbei im Falle eines Bremspedales unterhalb der Schwenkachse des Pedales angreifende Kolbenstange für den Bremskraftverstärker ist hierbei so ausgelegt, daß sie unter der Krafteinwirkung der Verlagerung des Bremskraftverstärkers nach hinten und der Schwenkbewegung der Pedale nach vorne ausweichend deformiert wird.

Die Erfindung wird anhand eines in den beiliegenden Zeichnungen gezeigten Ausführungsbeispieles näher erläutert. Es zeigt:
- Fig. 1: eine schematische Seitenansicht einer erfindungsgemäßen Lagerkonsolen-Anordnung für Pedale in Kraftfahrzeugen im Einbauzustand und
- Fig. 2: eine Seitenansicht der erfindungsgemäßen Lagerkonsolen-Anordnung für Pedale in Kraftfahrzeugen nach erfolgter Verformung des senkrechten Bereiches der Spritzwand/Windlauf-Baugruppe.

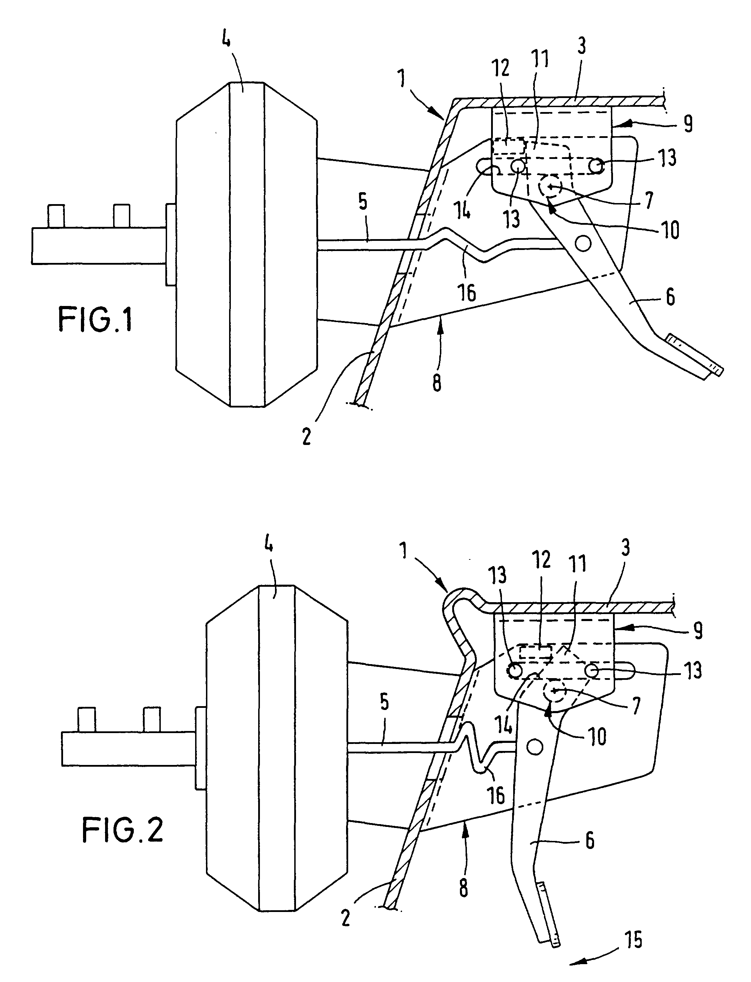

In den Figuren 1 und 2 ist eine Spritzwand/Windlauf-Baugruppe 1 angedeutet, die im wesentlichen aus zwei unterschiedlichen Bereichen, einen im wesentlichen senkrechten Bereich 2 und einen im wesentlichen horizontalen Bereich 3 besteht. An dem im wesentlichen senkrechten Bereich 2 ist in an sich bekannter Weise z.B. ein Bremskraftverstärker 4 befestigt, dessen Kolbenstange 5 über einen Bremspedal 6 betätigbar ist, das um eine lagefeste Schwenkachse 7 schwenkbar gelagert ist.

Die Schwenkachse 7 ist hierbei nicht , wie gemäß dem vorbekannten Stand der Technik, in beiden Lagerkonsolen, der an dem im wesentlichen senkrechten Bereich 2 der Spritzwand/Windlauf-Baugruppe 1 befestigten ersten Stützkonsole 8 und der an dem im wesentlichen horizontalen Bereich 3 der Spritzwand/Windlauf-Baugruppe 1 befestigten zweiten Lagerkonsole 9 aufgenommen, sondern die Schwenkachse 7 wird durch die Lagerkonsole 9 aufgenommen und weist keine Verbindung zur Stützkonsole 8 auf.

Die Pedale, wie z.B. das in dem Ausführungsbeispiel gezeigte Bremspedal 6 weist einen sich nach oben über die Schwenkachse 7 hinaus erstreckenden Anschlagarm 11 auf, der zusammen mit einem an sich bekannten Ruheanschlag 12 die Ruhelage der hängend angeordneten Pedale bestimmt.

Gemäß der Erfindung ist jedoch der Ruheanschlag 12 nicht an der zweiten Lagerkonsole 9, sondern an der ersten Stützkonsole 8 angeordnet, so daß er bei einer durch einen Frontalaufprall bewirkten Verformung des im wesentlichen senkrechten Bereiches 2 der Spritzwand/Windlauf-Baugruppe 1 nach hinten in den Fußraum des Kraftfahrzeuges auf den oberen Anschlagarm 11 der Pedale, wie z.B. des Bremspedales 6 einwirkt und dieses um seine Schwenkachse 7 derart verschwenkt, daß es mit seinen Betätigungsenden noch weiter aus dem Fußraum des Fahrers wegbewegt wird.

Um diese wünschenswerte Bewegung der Pedale 6 noch genauer zu bestimmen und der Pedalaufhängung die gewünschte Steifigkeit für den "Normalbetrieb" zu geben, sind gemäß weiterer Merkmale der Erfindung an der zweiten Lagerkonsole 9 Führungsbolzen 13 angeordnet, die mit einem Langloch 14 in den Seitenschenkeln der ersten Stützkonsole 8 derart zusammenwirken, daß die nach innen gerichtete Bewegung der ersten Stützkonsole 8 von der zweiten Lagerkonsole 9 kontrolliert wird.

Wie aus Fig. 2 ersichtlich wird, wird bei einer Verlagerung der ersten Stützkonsole 8 nach hinten eine erzwungene Schwenkbewegung des Pedales 6 in Richtung des Pfeiles 15 eingeleitet und dementsprechend muß innerhalb der Kolbenstange 5 für den Bremskraftverstärker 4 eine Vorkehrung getroffen sein, um die Kolbenstange 5 zu verkürzen. Im vorliegenden Fall ist dies in Form einer Knickstelle 16 gezeigt, die ihre im Normalbetrieb zunächst weiten Knicke unter übermäßiger Krafteinwirkung eng einknicken läßt, wodurch die entsprechende Ausweichbewegung in Richtung des Pfeiles 15 sichergestellt werden kann.

Die vorliegende Erfindung ist bewußt nur in einer schematischen Ausführungsform aufgezeigt, da es dem Fachmann selbstverständlich frei bleibt, über eine geeignete Form der beiden miteinander zusammenwirkenden Stütz- und Lagerkonsolen 8 und 9 zu bestimmen und auch für die eine "verlorene Bewegung" zur Verfügung stellende Ausbildung der Kolbenstange 5 verschiedenste bekannte Möglichkeiten anwenden kann, wie z.B. teleskopartig ineinander verschiebende Kolbenstangen und dergleichen.

## Patentansprüche

1. Lagerkonsolen-Anordnung für Pedale in Kraftfahrzeugen, bestehend aus einer ersten, ggf. U-förmigen, mit ihrer Basis an einem im wesentlichen senkrechten Bereich (2) der Spritzwand/Windlauf-Baugruppe (1) befestigten Stützkonsole (8) und einer zweiten, ggf. U-förmigen, mit ihrer Basis an einem im wesentlichen horizontalen Bereich (3) der Spritzwand/Windlauf-Baugruppe (1) befestigten Lagerkonsole (9), wobei die Schwenkachse (7) der Pedale, wie z.B. eines Bremspedales (6) lagerfest und schwenkbar gelagert aufgenommen ist, die Pedale, wie z.B. ein Bremspedal (6) mit einem über die Schwenkachse (7) nach oben hinausragenden Anschlagarm (11) versehen sind, der mit einem Ruheanschlag (12) die Ruhelage der Pedale bestimmend zusammenwirkt, wobei die Schwenkachse (7) der Pedale in Lageröffnungen (10) nur in der zweiten Lagerkonsole (9) schwenkbar gelagert ist, und
der Ruheanschlag (12) an der ersten Stützkonsole (8) derart angeordnet ist, daß die Bewegung des Ruheanschlags (12) nach hinten in den Fußraum des Fahrzeugs infolge der durch einen Frontalaufprall bewirkten Verformung der Spritzwand (2) den oberen Anschlagarm (11) des Pedals (6) derart verschwenkt, daß es aus dem Fußraum des Fahrers wegbewegt wird.

2. Lagerkonsolen-Anordnung für Pedale in Kraftfahrzeugen, nach Anspruch 1
**dadurch gekennzeichnet, daß**
- die zweite Lagerkonsole (9) über entsprechende Führungseinrichtungen an der ersten Stützkonsole (8) in Ausweichrichtung kontrolliert geführt ist.

3. Lagerkonsolen-Anordnung für Pedale in Kraftfahrzeugen, nach den Ansprüchen 1 und 2
**dadurch gekennzeichnet, daß**
- die zweite Lagerkonsole (9) mit von ihren Seitenschenkeln seitlich vorragenden Führungsbolzen (13) versehen ist, die mit entsprechenden Langlöchern (14) in den Seitenschenkeln der ersten Stützkonsole (8) eingreifen, um die Bewegung der ersten Stützkonsole (8) während einer Verformung des vertikalen Bereiches (2) der Spritzwand/Windlauf-Baugruppe (1) zu kontrollieren.

4. Lagerkonsolen-Anordnung für Pedale in Kraftfahrzeugen nach den Ansprüchen 1 bis 2,
**dadurch gekennzeichnet, daß**
- die im Falle eines Bremspedales (6) unterhalb der Schwenkachse (7) angelenkte Kolbenstange (5) für einen Bremskraftverstärker (4) mit einem Bereich (16) versehen ist, der bei Überschreitung bestimmter auf die Kolbenstange (5) einwirkender Kräfte eine Ausweichbewegung oder einen verlorenen Weg zur Verfügung stellt.

## Claims

1. Support console assembly for a pedal in a vehicle, consisting of a first, possibly U-shaped, mounting console secured (8) with its base on an essentially vertical area (2) of the bulkhead / cowl assembly (1) and a second, possibly U-shaped, support console (9) secured with its base on an essentially horizontal area (3) of the bulkhead / cowl assembly (1), wherein the swivel axis (7) of the pedals, like e.g. of a brake pedal (6), is fixed and swivel mounted, the pedals, e.g. of a brake pedal (6), are fitted with a stop arm (11) extending upwards over the swivel axis (7), wherein this stop arm (11) works in association with a rest stop (12) determining the position of rest of the pedals, wherein the swivel axis (7) of the pedals is swivel mounted in bearing openings (10) only in the second support console (9), and
the rest stop (12) is arranged on the first mounting console (8) in such a way that the movement of the rest stop (12) backwards into the area of the driver's feet in the vehicle, due to the deformation of the bulkhead (2) brought about by a front collision, swivels the upper stop arm (11) of the pedal (6) in such a way that it is moved out of the area of the driver's feet.

2. Support console assembly for a pedal in a vehicle according to Claim 1,
**characterised in that**
- the second support console (9) is guided in a controlled way through corresponding guide devices on the first mounting console (8) in the direction out of the way.

3. Support console assembly for a pedal in a vehicle according to Claims 1 and 2,
**characterised in that**
the second support console (9) is fitted with guide bolts (13) projecting laterally from its side arms, wherein these guide bolts (13) engage with corresponding elongated holes (14) in the side arms of the first mounting console (8), in order to control the movement of the first mounting console (8) duration deformation of the vertical area (2) of the bulkhead / cowl assembly (1).

4. Support control assembly for a pedal in a vehicle according to Claims 1 to 2,
**characterised in that**
- the piston rod (5) for a brake power amplifier (4) connected in the case of a brake pedal (6) below the swivel axis (7) is fitted with an area (16), which upon exceeding of certain forces acting upon the piston rod (5) provides a movement out of the way or a lost way.

## Revendications

1. Arrangement de console de support pour pédales dans des véhicules, constitué d'une première console d'appui (8), éventuellement en forme de U, fixée avec sa base sur une partie essentiellement verticale (2) du groupe tablier d'auvent/auvent (1), et d'une seconde console de support (9), éventuellement en forme de U, fixée avec sa base sur une partie essentiellement horizontale (3) du groupe tablier d'auvent/auvent (1), l'axe de pivotement (7) des pédales, comme par exemple d'une pédale de frein (6), étant logé de façon stationnaire et pivotante, les pédales, comme par exemple une pédale de frein (6), étant munies d'un bras de butée (11) dépassant vers le haut au-delà de l'axe de pivotement (7), le bras de butée coopérant avec une butée de repos (12) en déterminant la position de repos des pédales, l'axe de pivotement (7) des pédales étant placé de façon pivotante dans des ouvertures de palier (10) seulement dans la deuxième console de support (9), et la butée de repos (12) étant disposée sur la première console d'appui (8) de telle façon que le mouvement de la butée de repos (12) vers l'arrière dans l'espace pour les pieds du véhicule à la suite d'une déformation induite par un choc frontal du tablier d'auvent (2) pivote le bras de butée (11) supérieur de la pédale (6), de telle manière qu'elle est déplacée en-dehors de l'espace pour les pieds du conducteur.

2. Arrangement de console de support pour pédales dans des véhicules selon la revendication 1, **caractérisé en ce que** la deuxième console de support (9) est guidée de manière contrôlée à l'aide de dispositifs de guidage correspondants sur la première console d'appui (8) dans la direction d'évitement.

3. Arrangement de console de support pour pédales dans des véhicules selon les revendications 1 et 2, **caractérisé en ce que** la deuxième console de support (9) est munie de boulons de guidage (13) dépassant latéralement de ses montants latéraux, qui ont prise, avec des trous ovales (14) correspondants, dans les montants latéraux de la première console d'appui (8), afin de contrôler le mouvement de la première console d'appui (8) pendant une déformation de la partie verticale (2) du groupe tablier d'auvent/auvent (1).

4. Arrangement de console de support pour pédales dans des véhicules selon les revendications 1 à 3, **caractérisé en ce que**, en cas d'une pédale de frein (6), la tige de piston (5) d'un servofrein (4) articulée en-dessous de l'axe de pivotement (7) est munie d'une partie (16) qui permet de disposer, lors du dépassement de forces définies agissant sur la tige de piston (5), d'un mouvement d'évitement ou d'une voie perdue.
